# EUROPEAN PATENT SPECIFICATION

(11) **EP 3 570 094 B1**
(45) Date of publication and mention of the grant of the patent: **22.06.2022**
(21) Application number: 18739252.7
(22) Date of filing: 11.01.2018
(51) Int. Cl.: G02F 1/1334, G02F 1/1333, B32B 7/02, B32B 27/18

(54) **LIGHT CONTROL FILM**
LICHTKONTROLLFILM
FILM DE REGULATION DE LA LUMIERE

(30) Priority: 13.01.2017 JP 2017004114; 10.01.2018 JP 2018002118
(43) Date of publication of application: 20.11.2019
(73) Proprietor: Nitto Denko Corporation, Ibaraki-shi, Osaka 567-8680 (JP)
(72) Inventor: FUJINO Nozomi, Ibaraki-shi Osaka 567-8680 (JP); HIRAI Mariko, Ibaraki-shi Osaka 567-8680 (JP); OTSUKA Masanori, Ibaraki-shi Osaka 567-8680 (JP); YONEZAWA Hideyuki, Ibaraki-shi Osaka 567-8680 (JP)
(74) Representative: Grünecker Patent- und Rechtsanwälte PartG mbB
(86) International application number: PCT/JP2018/000457
(87) International publication number: WO 2018/131642

(56) References cited:
- WO-A1-2014/068203
- JP-A- 2004 347 972
- JP-A- 2008 007 754
- JP-A- 2013 148 744
- JP-A- 2014 081 630
- JP-A- 2014 081 630
- JP-A- 2015 215 420
- JP-A- 2015 215 420

## Description

### Technical Field

The present invention relates to an optical laminate and concerns a light control film

### Background Art

Hitherto, there has been developed a light control device utilizing a light-scattering effect of a composite of a polymer and a liquid crystal material. Such composite has a structure in which the liquid crystal material is phase-separated or dispersed in a polymer matrix, and hence allows a transmission (non-scattering) mode for transmitting light and a scattering mode for scattering light to be controlled by matching refractive indices of the polymer and the liquid crystal material and applying a voltage to the composite to change alignment of the liquid crystal material. Such light control device is often used by being incorporated into a glass, mainly typified by a window glass, and hence is required to have a high light transmittance particularly in the transmission mode. Patent Literature 2 discloses a liquid crystal element, comprising: A pair of substrates disposed opposite each other and having electrodes attached thereon, at least one of the substrates being a transparent substrate; and a liquid crystal light control layer disposed between the substrates and containing a composite including a chiral nematic liquid crystal phase and a polymer resin phase. The polymer resin phase contains a polymer compound. The dielectric anisotropy in the chiral nematic liquid crystal phase is positive. Patent Literature 3 concerns a variable light diffusion system switching between a transparent state and a translucent state comprising a PDLC layer located between two electrodes. The PDLC layer comprises a mixture of liquid crystals forming micro-droplets dispersed in a polymer matrix obtained from a photopolymerisable composition comprising vinyl compounds. The invention also concerns the use of a variable light diffusion system switching between a transparent state and a translucent state operating with a switching voltage lower than 30 Vrms.

Patent Literature 4 discloses a light control film, compriseing: A light control layer that can switch two or more kinds of haze in accordance with applied voltages; and a transparent conductive film that is laminated on the light control layer and applies voltages to the light control layer. The light control layer has liquid crystal molecules that are arranged in an air gap formed inside a polymer network made of resin formed in a three-dimensional network or dispersedly arranged in a polymer. The transparent conductive film contains a conductive polymer layer.

### Citation List

### Patent Literature

[PTL 1] JP 02-208627 A
[PTL 2] JP 2014 081630 A
[PTL 3] WO 2014/068203 A1
[PTL 4] JP 2015 215420 A . The two-part form is based on [PTL 2] .

### Summary of Invention

### Technical Problem

The present invention has been made in order to solve the problem of the related art described above, and an object of the present invention is to provide a light control device having a high light transmittance in a transmission mode.

### Solution to Problem

According to one aspect of the present invention, there is provided a light control film, including in this order: a first substrate including a first transparent electrode layer; a light control layer configured to change a scattered state of transmitted light based on a presence or absence of application of a voltage; and a second substrate including a second transparent electrode layer, the light control film being configured to be switchable between a non-scattering mode and a scattering mode based on the scattered state of the transmitted light, wherein a ratio of a haze value of the light control film in the scattering mode to a haze value of the light control film in the non-scattering mode (the haze value in the scatteringmode/the haze value in the non-scattering mode) is 8.0 or more, and wherein the light control film has a light transmittance of 80% or more in the non-scattering mode and wherein the transparent electrode layers contain crystal grains, and wherein the area occupancy ratio of the crystal grains is 30%, and wherein the light control layer comprises a polymer-dispersed liquid crystal layer.

In one embodiment, in the light control film, the first substrate includes a first base material and the first transparent electrode layer, the second substrate includes a second base material and the second transparent electrode layer, the first transparent electrode layer and the second transparent electrode layer are arranged so as to be opposed to each other, and the light control layer is arranged so as to be brought into contact with the first substrate and the second substrate.

In one embodiment, the first substrate and/or the second substrate has a transmittance of 85% or more.

In one embodiment, the first transparent electrode layer and/or the second transparent electrode layer contains indium tin oxide.

In one embodiment, the first base material and/or the second base material is formed of polyethylene terephthalate.

According to another aspect of the present invention, there is provided a light control glass. The light control glass includes the light control film.

### Advantageous Effects of Invention

According to the present invention, the light control device having a high light transmittance in a transmission mode can be provided.

### Brief Description of Drawings

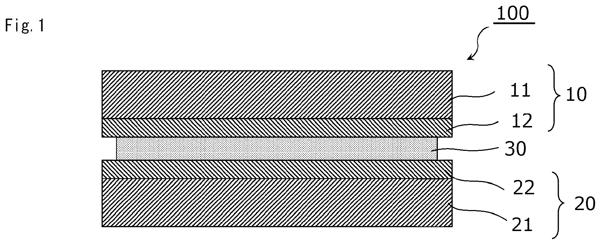

FIG. 1 is a schematic cross-sectional view of a light control film according to one embodiment of the present invention.

Embodiments of the present invention are described below with reference to the drawing. However, the present invention is not limited to these embodiments.

### A. Overall Configuration of Light Control Film

FIG. **1** is a schematic cross-sectional view of a light control film according to one embodiment of the present invention. A light control film **100** includes a first substrate **10,** a light control layer **30,** and a second substrate **20** in the stated order. The first substrate **10** includes a first transparent electrode layer **12.** In one embodiment, the first substrate **10** further includes a first base material **11.** The second substrate **20** includes a second transparent electrode layer **22.** In one embodiment, the second substrate **20** further includes a second base material **21.** The first transparent electrode layer **12** and the second transparent electrode layer **22** may be arranged to be opposed to each other so as to sandwich the light control layer **30.** In addition, in one embodiment, the light control layer **30** is arranged so as to be brought into contact with the first substrate **10** and the second substrate **20.** The light control filmmay further include another layer (not shown) . Examples of the other layer include a hard coat layer, a pressure-sensitive adhesive layer, and a protective layer. Those layers may be arranged on the outer side (side on which the transparent electrode layer is not arranged) of any one or both of the substrates.

Herein, the first base material and the second base material are sometimes collectively referred to as base materials, and the first transparent electrode layer and the second transparent electrode layer are sometimes collectively referred to as transparent electrode layers. In addition, the first substrate and the second substrate are sometimes collectively referred to as substrates.

The light control layer is a layer configured to change the scattered state of transmitted light based on the presence or absence of the application of a voltage. By virtue of including the light control layer, the light control film of the present invention is switchable between a non-scattering mode, in which the scattering of light is inhibited, and a scattering mode, in which light is scattered. In the present invention, a light control film having a high transmittance in the non-scattering mode can be obtained through the optimization of the light transmittances of the substrates, the configurations of the base materials included in the substrates, and the configurations of the transparent electrode layers. In addition, a light control film having a low haze in the non-scattering mode can be obtained. In one embodiment, the light control film of the present invention is used for a light control glass. The light control glass is a laminate of glass and a light control film, and may be used as, for example, a window glass. The light control glass exhibits a blind function of obstructing a view by bringing the light control film into the scattering mode, and besides, is excellent in transparency in the non-scattering mode.

The light transmittance of the light control film of the present invention in the non-scattering mode is preferably 80% or more, more preferably 85% or more, still more preferably 90% or more. The light transmittance is preferably as high as possible, but its upper limit is, for example, 99%. The term "light transmittance" as used in the present application refers to a total light transmittance, and a numerical value therefor is measured in conformity with JIS K 7105.

The light transmittance of the light control film of the present invention in the scattering mode is, for example, 70% or more, preferably 80% or more, more preferably 85% or more. The upper limit of the light transmittance is, for example, still more preferably 95%.

The haze value of the light control film of the present invention in the non-scattering mode is preferably 10% or less, more preferably 8% or less, still more preferably 6% or less. When the haze value falls within such range, in an application in which the light control film of the present invention is used as a blind film or the like, satisfactory visibility can be achieved in the case where there is no need to obstruct a view. The lower limit of the haze value in the non-scattering mode is, for example, 0.5%.

The haze value of the light control film of the present invention in the scattering mode is preferably 80% or more, more preferably 85% or more, still more preferably 90% or more. When the haze value falls within such range, a light control film having a light-scattering property suitable for use as a blind film or the like can be obtained. In one embodiment, the haze value of the light control film in the scattering mode is from 80% to 94%.

In the light control film of the present invention, the ratio of the haze value in the scattering mode to the haze value in the non-scattering mode (scattering mode/non-scattering mode) is 8.0 or more, preferably 10.0 or more, more preferably 15.0 or more. When the ratio falls within such range, a light control film excellent in balance between satisfactory visibility in the non-scattering mode and low visibility in the scattering mode can be obtained.

### B. Substrates (First Substrate and Second Substrate)

As described above, each of the substrates includes the transparent electrode layer, and preferably further includes the base material. In one embodiment, an alignment film is arranged on the light control layer side of the transparent electrode layer (opposite side to the base material). The alignment film is preferably used when, as described later, a polymer-dispersed liquid crystal layer of a reverse mode is formed as the light control layer. The alignment film may be formed by, for example, subjecting an applied film of polyimide, polyvinyl alcohol, or the like to rubbing treatment with a cloth of rayon or the like.

The light transmittance of each of the substrates is preferably 85% or more, more preferably 87% or more, still more preferably 90% or more. In the present invention, when the substrates each having a light transmittance in such range are used, the light control film has a high light transmittance in the non-scattering mode. The light transmittance is preferably as high as possible, but its upper limit is, for example, 99%.

### B-1. Base Materials (First Base Material and Second Base Material)

The thickness of each of the base materials is preferably 20 µm or more, more preferably 50 µm or more, still more preferably 70 µm or more. The upper limit of the thickness of each of the base materials is, for example, 400 µm, preferably 180 µm.

The light transmittance of each of the base materials is preferably 85% or more, more preferably 87% or more, still more preferably 90% or more. The light transmittance is preferably as high as possible, but its upper limit is, for example, 99%.

The base materials may each be a base material substantially having optical isotropy. The phrase "substantially having optical isotropy" as used herein means having an in-plane retardation Re of 20 nm or less (preferably 10 nm or less). The in-plane retardation Re is an in-plane retardation value measured with light having a wavelength of 590 nm at 23°C. The in-plane retardation Re is represented by Re=(nx-ny)xd. In the equation, nx represents a refractive index in a direction in which a refractive index becomes maximum in the plane of the base material (i.e., a slow axis direction), ny represents a refractive index in a direction perpendicular to the slow axis in the plane (i.e., a fast axis direction), and d represents the thickness (nm) of the base material.

The base materials may each be formed of any appropriate material as long as the effects of the present invention are obtained. The base materials may each be a resin base material or a glass base material. The base materials are each preferably a resin base material. As a formation material for the resin base material, for example, a polyester-based resin, a (meth)acrylic resin, an olefin-based resin, a cyclic olefin-based resin, a polycarbonate-based resin, a polyurethane-based resin, a cellulose-based resin, or a styrene-based resin may be preferably used. Specific examples of the polyester-based resin include polyethylene terephthalate (PET), polybutylene terephthalate (PBT), copolymerized PET containing isophthalic acid, copolymerized PET (PET-G) containing an alicyclic dicarboxylic acid or an alicyclic diol having a cyclohexane ring, other polyesters, and copolymers or blends thereof. Of those, PET or a cyclic olefin-based resin is preferably used, and PET is more preferably used from the viewpoint of transparency. Those materials may be used alone or in combination thereof.

Each of the base materials may have a functional layer on at least one main surface thereof, and preferably has a functional layer thereon. As a material for the functional layer, there are given a resin, an inorganic material, and a mixture thereof. The functional layer preferably contains a resin. When the functional layer contains a resin, the surface roughness of the base material can be reduced, and the roughness of the transparent electrode layer (described later) can be reduced. Examples of the functional layer include an easy-adhesion layer, an undercoat layer, a hard coat layer, and an oligomer blocking layer. The easy-adhesion layer is a layer to be arranged in order to enhance adhesiveness between the base material and the transparent electrode layer (described later) . The undercoat layer is a layer to be arranged in order to adjust the reflectance and optical hue of the base material with the transparent electrode layer. The hard coat layer is a layer to be arranged in order to enhance the scratch resistance of the base material with the transparent electrode layer. The oligomer blocking layer is a layer for inhibiting an oligomer from precipitating from the base material. Those functional layers may be used alone or in combination thereof.

### B-2. Transparent Electrode Layers (First Transparent Electrode Layer and Second Transparent Electrode Layer)

The transparent electrode layers may each be formed using, for example, a metal oxide, such as indium tin oxide (ITO), zinc oxide (ZnO), or tin oxide (SnO₂). A transparent electrode layer containing ITO is preferably formed. The transparent electrode layer containing ITO is excellent in transparency. The transparent electrode layers may each be patterned into a desired shape depending on purposes.

The light transmittance of each of the transparent electrode layers is preferably 85% or more, more preferably 87% or more, still more preferably 90% or more. In the present invention, when the transparent electrode layers each having a light transmittance in such range are used, the light control film has a high light transmittance in the non-scattering mode. The light transmittance is preferably as high as possible, but its upper limit is, for example, 99%.

Each of the transparent electrode layers contains crystal grains. When the transparent electrode layer contains the crystal grains, the light transmittance of the substrate can be enhanced. A method of forming the crystal grains is not limited, but for example, the crystal grains may be suitably formed through heating in the air. The area occupancy ratio of the crystal grains in the transparent electrode layer is, according to the claimed invention, 30% When the area occupancy ratic of the crystal grains falls within the above-mentioned range, the light transmittance can be enhanced. The area occupancy ratio of the crystal grains may be calculated from an area ratio between a crystal grain region and a non-crystalline region through the observation of the surface of the transparent electrode layer with a transmission electron microscope (TEM).

The surface roughness Ra of each of the transparent electrode layers is, for example, 0.1 nm or more. When the surface roughness Ra of each of the transparent electrode layers is less than 0.1 nm, there is a risk in that its adhesiveness with the base material may become poor. The upper limit of the surface roughness Ra of each of the transparent electrode layers is preferably less than 1.2 nm, more preferably 1.0 nm or less, still more preferably less than 1.0 nm, particularly preferably 0.8 nm or less. When the surface roughness Ra of each of the transparent electrode layers is excessively large, there is a risk in that it may become difficult to suitably form the crystal grains. The term "surface roughness Ra" as used herein means an arithmetic average roughness Ra measured with an atomic force microscope (AFM).

The thickness of each of the transparent electrode layers is, for example, 10 nm or more, preferably 15 nm or more. When the thickness of each of the transparent electrode layers is less than 10 nm, i.e., below the above-mentioned lower limit, there is a risk in that the area occupancy ratio of the crystal grains may be reduced. The upper limit of the thickness of each of the transparent electrode layers is, for example, 50 nm or less, preferably 35 nm or less, more preferably less than 30 nm, still more preferably 27 nm or less. When the thickness of each of the transparent electrode layers is more than 50 nm, there is a risk in that the transmittance may become poor, and there is also a risk in that the surface roughness of the transparent electrode layer may be increased.

### C. Light Control Layer

The light control layer is a layer configured to change the scattered state of light based on the presence or absence of the application of a voltage . The light control layer comprises a liquid crystal layer configured to change the alignment state of molecules based on the presence or absence of the application of a voltage.

According to the claimed invention, a polymer-dispersed liquid crystal layer is formed as the liquid crystal layer. The polymer-dispersed liquid crystal layer is formed by dispersing a liquid crystal compound in a resin matrix. In the polymer-dispersed liquid crystal layer, the non-scattering mode and the scattering mode can be switched by changing the degree of alignment of the liquid crystal compound based on the presence or absence of the application of a voltage. In one embodiment, the non-scattering mode is exhibited under a state in which a voltage is applied, and the scattering mode is exhibited under a state in which no voltage is applied (normal mode) . In this embodiment, at the time of the application of no voltage, the liquid crystal compound is not aligned, resulting in the scattering mode, and at the time of the application of a voltage, the liquid crystal compound is aligned, resulting in the non-scattering mode. In another embodiment, the scattering mode is exhibited under a state in which a voltage is applied, and the non-scattering mode is exhibited under a state in which no voltage is applied (reverse mode) . In this embodiment, at the time of the application of no voltage, the liquid crystal compound is aligned, and the liquid crystal compound in the aligned state shows approximately the same refractive index as the resin matrix, resulting in the non-scattering mode. On the other hand, the application of a voltage disturbs the alignment of the liquid crystal compound, resulting in the scattering mode.

Any appropriate liquid crystal compound of a non-polymeric type is used as the liquid crystal compound. Examples thereof include nematic, smectic, and cholesteric liquid crystal compounds. A nematic liquid crystal compound is preferably used because excellent transparency can be achieved in the non-scattering mode. Examples of the nematic liquid crystal compound include a biphenyl-based compound, a phenyl benzoate-based compound, a cyclohexylbenzene-based compound, an azoxybenzene-based compound, an azobenzene-based compound, an azomethine-based compound, a terphenyl-based compound, a biphenyl benzoate-based compound, a cyclohexylbiphenyl-based compound, a phenylpyridine-based compound, a cyclohexylpyrimidine-based compound, and a cholesterol-based compound.

The content of the liquid crystal compound in the light control layer (polymer-dispersed liquid crystal layer) is, for example, 80 wt% or more, preferably from 90 wt% to 99 wt%, more preferably from 92 wt% to 98 wt%.

A resin for forming the resin matrix of the light control layer (polymer-dispersed liquid crystal layer) may be appropriately selected depending on the light transmittance, the refractive index of the liquid crystal compound, and the like. The resin is typically an active energy ray-curable resin, and a liquid crystal polymer, a (meth) acrylic resin, a silicone-based resin, an epoxy-based resin, a fluorine-based resin, a polyester-based resin, and a polyimide resin may be preferably used.

The content of the resin matrix in the light control layer (polymer-dispersed liquid crystal layer) is 20 wt% or less, preferably from 1 wt% to 10 wt%, more preferably from 2 wt% to 8 wt%. When the content of the resin matrix is less than 1 wt%, a problem of, for example, a reduction in adhesiveness with each of the substrates may occur. Meanwhile, when the content of the resin matrix is more than 20 wt%, a problem of, for example, an increase in driving voltage or a reduction in light control function may occur.

The polymer-dispersedliquid crystal layer may be formed by any appropriate method. The polymer-dispersed liquid crystal layer may be obtained by, for example, applying a composition for forming a light control layer (polymer-dispersed liquid crystal layer) to the transparent electrode layer side of one of the substrates to form an applied layer, laminating the other substrate on the applied layer so that the transparent electrode layers are opposed to each other, to thereby form a laminate, and curing the applied layer. In this case, the composition for forming a light control layer contains, for example, a monomer (preferably an active energy ray-curable monomer) for forming a resin matrix and a liquid crystal compound.

### Examples

The present invention is specifically described below by way of Examples, but the present invention is not limited to these Examples. In addition, in Examples, "part(s)" and "%" are by weight unless otherwise specified. With regard to the measurement of thicknesses, the thicknesses of an undercoat layer and an ITO layer were measured by cross-sectional observation with a transmission electron microscope (manufactured by Hitachi, Ltd., HF-2000) . In addition, the thickness of a base material was measured using a thickness meter (Digital Dial Gauge DG-205 from Peacock).

### [Example 1]

An undercoat layer (thickness: 35 nm) formed of a thermosetting resin containing a melamine resin, an alkyd resin, and an organic silane condensate at a weight ratio of 2:2:1 was formed on a first main surface of a first PET film (thickness: 23 µm) to provide a first PET base material with an undercoat layer. Then, an ITO layer was formed on the undercoat layer. Subsequently, a second PET base material (thickness: 50 µm) with a pressure-sensitive adhesive layer (thickness: 23 µm) was bonded to a second main surface of the first PET film (surface opposite to the side on which the undercoat layer and the ITO layer had been formed) to form a laminate, and the laminate was subjected to heat treatment (heated in a hot-air oven at 140°C for 30 minutes). Laminates each of which had been thus obtained were used as a first substrate (transmittance: 90.2%) and a second substrate (transmittance: 90.2%).

The first substrate and the second substrate were bonded to each other via a composition for forming a light control layer (polymer-dispersed liquid crystal layer), which contained nematic liquid crystal molecules and a resin, so that the ITO layers were opposed to each other, and then the composition for forming a polymer-dispersed liquid crystal layer was cured. Thus, a light control film was obtained.

### [Comparative Example 1]

A light control film was obtained in the same manner as in Example 1 except that: a PET film having a thickness of 190 µm was used as the first PET film; the thickness of the ITO layer was changed to 65 nm; and the heat treatment was not performed. The first substrate and the second substrate each had a transmittance of 79.0%.

### <Evaluation>

The light control films obtained in Example and Comparative Example were subjected to the following evaluations. The results are shown in Table 1.

### (1) Transmittance

A voltage (100 V) was applied to each of the light control films obtained in Example and Comparative Example, and a light transmittance and a haze value at the time of the application of the voltage (light transmittance and haze value in a non-scattering mode), and a light transmittance and a haze value at a time when the voltage was not applied (light transmittance and haze value in a scattering mode) were measured using "U4100" (product name) manufactured by Hitachi High-Tech Science Corporation. The results are shown in Table 1.

### (2) Surface Roughness Ra

The surface of the ITO layer was subjected to measurement using a scanning probe microscope (manufactured by Seiko Instruments Inc., apparatus name: "Scanning Probe Microscope SPI3800") under the conditions of a contact mode, a probe made of Si₃N₄ (spring constant: 0.09 N/m), and a scan size of 1 µm□.

### (3) Area Occupancy Ratio of Crystal Grains in ITO Layer

The ITO layer was subjected to plane observation using a transmission electron microscope (manufactured by Hitachi, Ltd., "H-7650") to provide a plane image at a magnification of 100,000×. Next, the ratio of the area of crystal grains (crystallized portions) to the total area of the ITO layer was measured.

**Table 1**

| | Base material | Transparent electrode layer | | | Substrate transmittance (%) | Light transmittance of light control film | | Haze value of light control film | | |
|---|---|---|---|---|---|---|---|---|---|---|
| | | Material | Roughness (nm) | Crystal grains (%) | | Non-scattering mode (%) | Scattering mode (%) | Non-scattering mode (%) | Scattering mode (%) | Scattering mode/non-sc attering mode |
| Example 1 | PET | ITO | 0.4 | 100 | 90.2 | 88 | 89 | 5.1 | 93.2 | 18.3 |
| Comparative Example 1 | PET | ITO | 1.2 | 10 | 79 | 79 | 79 | 6.3 | 93.3 | 14.8 |

### Reference Signs List

- **10**: first substrate

- **20**: second substrate
- **30**: light control layer
- **100**: light control film

## Claims

1. A light control film, comprising in this order:
a first substrate including a first transparent electrode layer;
a light control layer configured to change a scattered state of transmitted light based on a presence or absence of application of a voltage; and
a second substrate including a second transparent electrode layer,
the light control film being configured to be switchable between a non-scattering mode and a scattering mode based on the scattered state of the transmitted light,
wherein a ratio of a haze value of the light control film in the scattering mode to a haze value of the light control film in the non-scattering mode (the haze value in the scattering mode/the haze value in the non-scattering mode) is 8.0 or more, and
wherein the light control film has a light transmittance of 80% or more in the non-scattering mode;
and
wherein the light control layer comprises a polymer-dispersed liquid crystal layer and **characterized in that** the transparent electrode layers contain crystal grains, wherein the area occupancy ratio of the crystal grains is 30%.

2. The light control film according to claim 1,
wherein the first substrate includes a first base material and the first transparent electrode layer,
wherein the second substrate includes a second base material and the second transparent electrode layer,
wherein the first transparent electrode layer and the second transparent electrode layer are arranged so as to be opposed to each other, and
wherein the light control layer is arranged so as to be brought into contact with the first substrate and the second substrate.

3. The light control film according to claim 1 or 2, wherein the first substrate and/or the second substrate has a transmittance of 85% or more.

4. The light control film according to any one of claims 1 to 3, wherein the first transparent electrode layer and/or the second transparent electrode layer contains indium tin oxide.

5. The light control film according to any one of claims 1 to 4, wherein the first base material and/or the second base material is formed of polyethylene terephthalate.

6. A light control glass, comprising the light control film of any one of claims 1 to 5.

## Patentansprüche

1. Light-Control-Film, der in dieser Reihenfolge umfasst:
ein erstes Substrat, das eine erste transparente Elektrodenschicht enthält;
eine Light-Control-Schicht, die so ausgeführt ist, dass sie einen gestreuten Zustand von durchgelassenem Licht auf Basis eines Vorhandenseins oder Nichtvorhandenseins von Anlegung einer Spannung ändert; und
ein zweites Substrat, das eine zweite transparente Elektrodenschicht enthält;
wobei der Light-Control-Film so ausgeführt ist, dass er auf Basis des gestreuten Zustandes des durchgelassenen Lichtes zwischen einem nicht-streuenden Modus und einem streuenden Modus umgeschaltet werden kann,
ein Verhältnis eines Opazitäts-Wertes des Light-Control-Films in dem streuenden Modus zu einem Opazitäts-Wert des Light-Control-Films in dem nicht-streuenden Modus (der Opazitäts-Wert in dem streuenden Modus/der Opazitäts-Wert in dem nicht-streuenden Modus) 8,0 oder mehr beträgt, und
der Light-Control-Film in dem nicht-streuenden Modus eine Lichtdurchlässigkeit von 80 % oder mehr hat;
und
wobei die Light-Control-Schicht eine polymerdispergierte Flüssigkristallschicht umfasst und **dadurch gekennzeichnet, dass** die transparenten Elektrodenschichten Kristallkörner enthalten, wobei der Flächenbesetzungsanteil der Kristallkörner 30 % beträgt.

2. Light-Control-Film nach Anspruch 1,
wobei das erste Substrat ein erstes Basismaterial und die erste transparente Elektrodenschicht enthält,
das zweite Substrat ein zweites Basismaterial und die zweite transparente Elektrodenschicht enthält,
die erste transparente Elektrodenschicht und die zweite transparente Elektrodenschicht so angeordnet sind, dass sie einander gegenüberliegen, und
die Light-Control-Schicht so angeordnet ist, dass sie mit dem ersten Substrat und dem zweiten Substrat in Kontakt gebracht wird.

3. Light-Control-Film nach Anspruch 1 oder 2,
wobei das erste Substrat und/oder das zweite Substrat einen Transmissionsgrad von 85 % oder mehr haben/hat.

4. Light-Control-Film nach einem der Ansprüche 1 bis 3, wobei die erste transparente Elektrodenschicht und/oder die zweite transparente Elektrodenschicht Indiumzinnoxid enthalten/enthält.

5. Light-Control-Film nach einem der Ansprüche 1 bis 4, wobei das erste Basismaterial und/oder das zweite Basismaterial aus Polyethylenterephthalat bestehen/besteht.

6. Light-Control-Glas, das den Light-Control-Film nach einem der Ansprüche 1 bis 5 umfasst.

## Revendications

1. Film de régulation de lumière comprenant dans cet ordre :
un premier substrat incluant une première couche d'électrode transparente,
une couche de régulation de lumière configurée pour modifier l'état de diffusion de la lumière transmise sur la base de la présence ou de l'absence de l'application d'une tension, et
un second substrat incluant une seconde couche d'électrode transparente,
le film de régulation de lumière étant configuré pour pouvoir être commuté entre un mode sans diffusion et un mode à diffusion sur la base de l'état de diffusion de la lumière transmise,
dans lequel le rapport de la valeur de trouble du film de régulation de lumière dans le mode à diffusion sur la valeur de trouble du film de régulation de lumière dans le mode sans diffusion (la valeur de trouble dans le mode à diffusion / la valeur de trouble dans le mode sans diffusion) vaut 8,0 ou plus dans le mode sans diffusion,
dans lequel la couche de régulation de lumière comprend une couche de cristaux liquides à dispersion polymère, et **caractérisé en ce que** les couches d'électrode transparente contiennent des grains de cristaux, le rapport d'occupation de surface des grains de cristaux étant de 30 %.

2. Film de régulation de lumière selon la revendication 1,
dans lequel le premier substrat inclut un premier matériau de base et la première couche d'électrode transparente,
dans lequel le second substrat inclut un second matériau de base et la seconde couche d'électrode transparente,
dans lequel la première couche d'électrode transparente et la seconde couche d'électrode transparente sont disposées de sorte à être opposées l'une à l'autre, et
dans lequel la couche de régulation de lumière est disposée de sorte à être mise en contact avec le premier substrat et le second substrat.

3. Film de régulation de lumière selon la revendication 1 ou la revendication 2,
dans lequel le premier substrat et/ou le second substrat présente une transmittance de 85 % ou plus.

4. Film de régulation de lumière selon l'une quelconque des revendications 1 à 3, dans lequel la première couche d'électrode transparente et/ou la seconde couche électrode transparente contient un oxyde d'étain indium.

5. Film de régulation de lumière selon l'une quelconque des revendications 1 à 4, dans lequel le premier matériau de base et/ou le second matériau de base est formé de polyéthylène téréphtalate.

6. Verre de régulation de lumière comprenant le film de régulation de lumière conforme à l'une quelconque des revendications 1 à 5.
